# EUROPÄISCHE PATENTSCHRIFT

(11) **EP 1 148 520 B1**
(45) Veröffentlichungstag und Bekanntmachung des Hinweises auf die Patenterteilung: **25.10.2006**
(21) Anmeldenummer: 00128760.6
(22) Anmeldetag: 30.12.2000
(51) Int. Cl.: H01F 1/24, F16K 31/06

(54) **Gesinterter weichmagnetischer Werkstoff und Verfahren zu dessen Herstellung**
Soft magnetic material and its production process
Matériau magnétiquement doux et son procédé de fabrication

(30) Priorität: 22.04.2000 DE 10020083
(43) Veröffentlichungstag der Anmeldung: 24.10.2001
(73) Patentinhaber: ROBERT BOSCH GMBH, 70442 Stuttgart (DE)
(72) Erfinder: Aichele, Wilfried, 71364 Winnenden (DE); Reinsch, Bernd, 71642 Ludwigsburg (DE); Czerwinski, Klaus, 73574 Iggingen (DE)

(56) Entgegenhaltungen:
- EP-A- 0 406 580
- EP-A- 0 541 887
- PATENT ABSTRACTS OF JAPAN vol. 006, no. 037 (E-097), 6. März 1982 (1982-03-06) & JP 56 155510 A (TOHOKU METAL IND LTD), 1. Dezember 1981 (1981-12-01)

## Beschreibung

Die Erfindung betrifft einen gesinterten weichmagnetischen Werkstoff, insbesondere zur Verwendung in Magnetventilen, und ein Verfahren zu dessen Herstellung nach der Gattung der unabhängigen Ansprüche.

### Stand der Technik

Weichmagnetische Werkstoffe bzw. Bauteile werden insbesondere in magnetventilgesteuerten Einspritzsystemen moderner Diesel- und Ottomotoren eingesetzt. Dabei machen die wachsenden Anforderungen nach reduzierten Verbrauchs- und Emissionswerten sowie nach reduzierten Kosten zunehmend die Herstellung von derartigen weichmagnetischen Komponenten durch Metallpulver-Spritzgießen (MIM) oder durch konventionelle Pulvermetallurgie (PM) interessant, da diese Verfahren eine hohe Formvariabilität bei gleichzeitig endformnaher Geometrie ermöglichen. Gleichzeitig ist durch den Einsatz dieser Verfahren eine verbundene Formgebung der ansonsten mechanisch schwer bearbeitbaren weichmagnetischen Werkstoffe möglich.

Ein wesentlicher Nachteil bisher bekannter weichmagnetischer MIM- oder PM-Bauteile gegenüber Bauteilen aus Kompaktwerkstoffen ist jedoch deren geringe Dichte, die auf eine sinterbedingte Porösität von bis zu 8 Volumenprozent in bekannten MIM-Bauteilen bzw. bis zu 20 Volumenprozent in bekannten PM-Bauteilen zurückzuführen ist. Demzufolge sind auch die erreichbaren Werte der volumenbezogenen weichmagnetischen Eigenschaften, d. h. insbesondere die erreichbare Sättigungspolarisation, derartiger Bauteile niedriger als die von Bauteilen aus Kompaktwerkstoffen.

Nachteilig sind zudem die bisher bei bekannten MIM- oder PM-Bauteilen zur Erzeugung akzeptabler Sinterdichten notwendigen hohen Sintertemperaturen, die beispielsweise im Fall von Fe-Co-Werkstoffen bei bis zu 1400°C liegen. Derartig hohe Temperaturen beim Sintern führen unter anderem zu hohen Prozesskosten.

Aufgabe der vorliegenden Erfindung war die Herstellung eines gesinterten weichmagnetischen Werkstoffes mit Hilfe des Metallpulver-Spritzgießens oder konventioneller Pulvermetallurgie mit verbesserten weichmagnetischen Eigenschaften, höheren Sinterdichten und gleichzeitig niedrigeren Sintertemperaturen, ohne dabei die elektrischen Eigenschaften der erhaltenen Bauteile zu verschlechtern.

In der Schrift EP-A-04 06 580 wird nur auf Boroxide und nicht, wie beim Anmeldungsgegenstand auf Boride hingewiesen. In dieser Schrift wird erwähnt, dass die zweite Substanz einen dünnen Beschichtungsfilm für die erste Substanz, das heißt die aus einer Metalllegierung auf Eisenbasis bestehenden Körnchen darstellen soll. Durch diesen dünnen Beschichtungsfilm sollen die Körnchen im Wesentlichen voneinander getrennt werden. Diese zweite Substanz soll ein isolierendes oder elektrisch besonders widerstandsfähiges Material darstellen. Die Beschichtung der Teilchen muss möglichst dünn sein, da sonst die magnetischen Eigenschaften des die Schicht umgebenden Primärkorns stark sinken würden. Durch die zweite Substanz erfolgt nur eine Beschichtung der Teilchen, die Teilchen selbst werden nicht beeinflusst.

### Vorteile der Erfindung

Der erfindungsgemäße weichmagnetische Werkstoff und das erfindungsgemäße Verfahren zu dessen Herstellung hat gegenüber dem Stand der Technik den Vorteil, dass damit ein weichmagnetischer Werkstoff mit hoher Sinterdichte und gleichzeitig hoher Sättigungspolarisation erreicht wird. So liegt die erzielte Sinterdichte typischerweise oberhalb von 92 % der maximal erreichbaren Dichte, entsprechend einer sinterbedingten offenen Porösität von weniger als 8 Volumenprozent bei einer typischen Sättigungspolarisation von 2,1 Tesla.

Darüber hinaus hat der erfindungsgemäße weichmagnetische Werkstoff den Vorteil, dass die magnetischen Eigenschaften der eingesetzten weichmagnetischen ersten Ausgangskomponente als Hauptbestandteil durch die sich in dieser Ausgangskomponente beim Sintern nicht oder nur in geringem Umfang lösende zweite Ausgangskomponente nicht verschlechtert werden.

Der erfindungsgemäße Werkstoff hat zudem den Vorteil, dass das Sintern bei einer niedrigeren Sintertemperatur erfolgen kann als bei einer Ausgangsmischung ohne eine sich beim Sintern verflüssigende Komponente. So sind nunmehr beim Sintern Endtemperaturen von typischerweise 1200 °C bis 1350°C, insbesondere 1250°C bis 1300°C, schon ausreichend. Weiter ist vorteilhaft, dass der erfindungsgemäße weichmagnetische Werkstoff keine oder nur eine geringfügige Beeinträchtigung der Koerzitivfeldstärke und des spezifischen elektrischen Widerstandes durch den Zusatz der zweiten Ausgangskomponente erfährt. Damit bleiben die Eigenschaften bekannter weichmagnetischer Werkstoffe, die ohne diesen sich beim Sintern verflüssigenden Zusatz hergestellt worden sind, erhalten.

Der erfindungsgemäß hergestellte weichmagnetische Werkstoff eignet sich insgesamt besonders gut zur Herstellung von weichmagnetischen MIM- oder PM-Bauteilen, wie sie beispielsweise für Magnetventile eingesetzt werden, sowie für vielfältige Anwendungen, bei denen eine hohe magnetische. Leistungsfähigkeit pro Volumeneinheit gefordert ist.

Vorteilhafte Weiterbildungen der Erfindung ergeben sich aus den in den Unteransprüchen genannten Maßnahmen.

So ist es besonders vorteilhaft, als Flüssigphasenbildner Bor, Phosphor sowie Legierungen von Bor oder Phosphor mit einem oder mehreren Elementen ausgewählt aus der Gruppe Eisen, Cobalt, Nickel, Chrom und Silizium einzusetzen. Diese Flüssigphasenbildner weisen zusammen mit Eisen oder einer Eisenlegierung als weichmagnetische Hauptphase bzw. weichmagnetischen Hauptbestandteil besonders günstige Sintereigenschaften auf. Darüber hinaus verflüssigen sie sich typischerweise bei Temperaturen oberhalb von 1000°C, insbesondere oberhalb von 1150 °C, und lösen sich insbesondere beim Sintern nicht oder nur in geringem Umfang im flüssigen Zustand in der weichmagnetischen ersten Ausgangskomponente.

Die Verarbeitung der Ausgangsmischung zur Herstellung des weichmagnetischen Werkstoffes kann vorteilhaft einerseits durch Metallpulver-Spritzgießen oder alternativ durch konventionelle Techniken der Pulvermetallurgie erfolgen.

### Ausführungsbeispiele

Als weichmagnetische erste Ausgangskomponente wird zunächst ein Eisenpulver oder ein Eisen-Legierungspulver vorgegeben. Das Eisen-Legierungspulver ist bevorzugt eine Legierung von Eisen mit mindestens einem Element ausgewählt aus der Gruppe Cobalt, Chrom, Silizium oder Nickel sowie gegebenenfalls weiteren Legierungselementen. Dabei wird das Cobalt der Legierung in einem Anteil von 0 bis 55 Masseprozent, das Chrom in einem Anteil von 0 bis 20 Masseprozent, das Silizium in einem Anteil von 0 bis 10 Masseprozent und das Nickel in einem Anteil von 0 bis 70 Masseprozent der Eisenlegierung zugesetzt.

Die zweite, der Ausgangsmischung als Nebenbestandteil zugesetzte Ausgangskomponente, enthält beispielsweise einen Flüssigphasenbildner wie Bor oder Phosphor.

Alternativ zu Bor oder Phosphor können jedoch auch Legierungen von Bor oder Phosphor mit einem oder mehreren Elementen ausgewählt aus der Gruppe Eisen, Cobalt, Nickel, Chrom oder Silizium eingesetzt werden. Als besonders bevorzugt haben sich Legierungen, die einen wesentlichen Volumenanteil an Boriden oder Phosphiden enthalten, herausgestellt.

Insbesondere sind geeignete derartige Flüssigphasenbildner die Verbindungen Fe₂B, FeB, Co₃B, Co₂B, CoB, Ni₃B, Ni₂B, Ni₄B₃, NiB, Cr₂B, Cr₅B₃, CrB, Cr₃B₄, CrB₂, CrB₄, SiB₃, SiB₆ oder allgemein SiBₙ, Fe₃P, Fe₂P, FeP, FeP₂, FeP₄, Co₂P, CoP, Ni₃P, Ni₅P₂, Ni₁₂P₅, Ni₂P, Ni₅P₄, NiP, NiP₂, NiP₃, Cr₃P, Cr₂P, Cr₁₂P₇, CrP, CrP₂, CrP₄, SiP oder deren Mischungen. Neben diesen Legierungen können zudem auch solche Legierungen eingesetzt werden, die zumindest einen wesentlichen Volumenanteil der vorgenannten Phosphide bzw. Boride enthalten.

Das wesentliche Kennzeichen des als zweite Ausgangskomponente bzw. Nebenbestandteil eingesetzten Flüssigphasenbildners ist, dass dieser sich beim Sintern der Ausgangsmischung zeitweilig zumindest weitgehend verflüssigt. Auf diese Weise wird gewährleistet, dass die zweite Ausgangskomponente die als Pulverteilchen eingesetzte erste Ausgangskomponente nach den Sintern zumindest weitgehend, insbesondere als Korngrenzenphase, umgibt. Weiter ist wichtig, dass die zweite Ausgangskomponente insbesondere im flüssigen Zustand nicht oder nur geringfügig in der ersten Ausgangskomponente lösbar ist, so dass es zu einer möglichst geringen Durchmischung und damit Beeinträchtigung der magnetischen Eigenschaften der ersten Ausgangskomponente kommt.

Gemäß der Erfindung wird die erste Ausgangskomponente und die zweite Ausgangskomponente jeweils in Form eines Pulvers eingesetzt, wobei die Korngröße der ersten Ausgangskomponente zwischen D₅₀ = 1 µm und 300 µm, insbesondere 3 µm bis 100 µm, und die Korngröße der zweiten Ausgangskomponente zwischen D₅₀ = 0,1 µm und 100 µm, insbesondere 0,5 µm bis 10 µm liegt. Der Anteil der zweiten Ausgangskomponente beträgt dabei 0,02 Masseprozent bis 20 Masseprozent, der Anteil der ersten Ausgangskomponente entsprechend 99,98 Masseprozent bis 80 Masseprozent.

Im Übrigen kann es vorteilhaft sein, wenn der Ausgangsmischung zusätzlich vor dem Sintern ein an sich bekannter organischer Binder zugesetzt wird, der sich bei einer Temperaturbehandlung unterhalb der Sintertemperatur zumindest nahezu vollständig verflüchtigt bzw. zersetzt. Dieser organische Binder ist beispielsweise ein Mikrowachs oder ein Polymer wie Polyolefin und wird in einem Anteil von 6 bis 10 Masseprozent in die Ausgangsmischung eingesetzt.

Die zugesetzte zweite Ausgangskomponente wird im Übrigen pulvertechnisch in Form eines feinen Pulvers eingebracht, das beispielsweise durch Mahlen oder durch Verdüsen aus einer schmelzmetallurgisch hergestellten Legierung erzeugt worden ist. Dieses Pulver wird dann mit dem Pulver der weichmagnetischen ersten Ausgangskomponente gemischt und/oder gemeinsam mit dieser vermahlen sowie gegebenenfalls mit dem erläuterten, der Ausgangsmischung zugesetzten organischen Binder vermischt, so dass die Ausgangsmischung in Form eines spritzfähigen Compounds vorliegt.

Nach dem Mischen der erläuterten Ausgangskomponenten zu der Ausgangsmischung erfolgt dann deren Formgebung mittels Metallpulver-Spritzgießen (MIM) oder mit Hilfe eines pulvermetallurgischen Formgebungsverfahrens. Sofern das Metallpulver-Spritzgießen eingesetzt wird, weist die pulverförmige weichmagnetische erste Ausgangskomponente bevorzugt eine Korngröße von D₅₀ = 1 bis 50 µm, vorzugsweise 3 bis 20 µm auf. In diesem Fall beträgt weiterhin die Korngröße der die Flüssigphase bildenden pulverförmigen zweiten Ausgangskomponente D₅₀ = 0,1 bis 10 µm. Insbesondere ist die Korngröße der zweiten Ausgangskomponente stets deutlich kleiner als die Korngröße der ersten Ausgangskomponente.

Sofern die Formgebung mit Hilfe eines pulvermetallurgischen Formgebungsverfahrens erfolgen soll, wird die weichmagnetische erste Ausgangskomponente der Ausgangsmischung mit einer Korngröße D₅₀ von 10 bis 300 µm, vorzugsweise 20 bis 100 µm, zugesetzt. Die zweite Ausgangskomponente weist in diesem Fall zweckmäßig eine Korngröße D₅₀ von 1 bis 100 µm auf, wobei auch hier gilt, dass die Korngröße der zweiten Ausgangskomponente bevorzugt deutlich kleiner als die Korngröße der ersten Ausgangskomponente ist.

Nach der Formgebung der Ausgangsmischung mit einem der erläuterten Verfahren schließt sich dann das Sintern der geformten Ausgangsmischung zu dem gewünschten weichmagnetischen Werkstoff an, wobei beim Sintern typischerweise eine Endtemperatur von 1200°C bis 1350°C, insbesondere 1250°C bis 1300°C, erreicht wird. Gleichzeitig verflüssigt sich die zweite Ausgangskomponente im Laufe dieses Sinterprozesses zumindest weitgehend. Bevorzugt erfolgt diese Verflüssigung bei Temperaturen oberhalb von 1000°C, insbesondere oberhalb von 1150°C.

Hinsichtlich weiterer Details zu Einzelheiten des eingesetzten Sinterverfahrens sei auf die Anmeldung DE 199 60 095.3 verwiesen.

## Patentansprüche

1. Gesinterter weichmagnetischer Werkstoff, insbesondere zur Verwendung in Magnetventilen, mit einer Ausgangsmischung, aus der sich nach einem Sintern der weichmagnetische Werkstoff bildet, die eine weichmagnetische pulverförmige erste Ausgangskomponente als Hauptbestandteil und mindestens eine zweite pulverförmige Ausgangskomponente als Nebenbestandteil enthält, wobei die erste Ausgangskomponente ein weichmagnetisches Metall ist, und mindestens ein Element ausgewählt aus der Gruppe Eisen, Kobalt, Chrom und Nickel oder eine Legierung dieser Elemente oder eine Siliziumlegierung enthält, oder eine weichmagnetische Metalllegierung ist und die zweite Ausgangskomponente ein Flüssigphasenbildner ist, der Bor, Phosphor, ein Borid, ein Phosphid oder eine Legierung von Bor und/oder Phosphor mit mindestens einem Element ausgewählt aus der Gruppe Eisen, Kobalt, Nickel, Chrom und Silizium enthält.

2. Gesinterter weichmagnetischer Werkstoff nach Anspruch 1, **dadurch gekennzeichnet, dass** die Korngröße der ersten pulverförmigen Ausgangskomponente zwischen D₅₀ = 1 µm und 300 µm, insbesondere 3 µm bis 100 µm liegt.

3. Gesinterter weichmagnetischer Werkstoff nach Anspruch 1, **dadurch gekennzeichnet, dass** die Korngröße der zweiten pulverförmigen Ausgangskomponente zwischen D50 = 0,1 µm und 100 µm, insbesondere 0,5 µm bis 10 µm liegt.

4. Gesinterter weichmagnetischer Werkstoff nach mindestens einem der vorangehenden Ansprüche, **dadurch gekennzeichnet, dass** die zweite Ausgangskomponente der Ausgangsmischung in einem Anteil von 0,02 Masseprozent bis 20 Masseprozent und die erste Ausgangskomponente die Ausgangsmischung in einem Anteil von 99,98 Masseprozent bis 80 Masseprozent zugesetzt ist.

5. Gesinterter weichmagnetischer Werkstoff nach mindestens einem der vorangehenden Ansprüche, **dadurch gekennzeichnet, dass** sich die zweite Ausgangskomponente beim Sintern zeitweilig zumindest weitgehend verflüssigt und dass die zweite Ausgangskomponente die erste Ausgangskomponente nach dem Sintern zumindest weitgehend, insbesondere als Korngrenzenphase umgibt.

## Claims

1. Sintered soft-magnetic material, in particular for use in solenoid valves, having a starting mixture, from which the soft-magnetic material is formed after a sintering operation, which starting mixture contains a soft-magnetic pulverulent first starting component as its main constituent and at least a second pulverulent starting component as an auxiliary constituent, the first starting component being a soft-magnetic metal and containing at least one element selected from the group consisting of iron, cobalt, chromium and nickel or an alloy of these elements or a silicon alloy, or being a soft-magnetic metal alloy, and the second starting component being a liquid phase former, which contains boron, phosphorous, a boride, a phosphide or an alloy of boron and/or phosphorous with at least one element selected from the group consisting of iron, cobalt, nickel, chromium and silicon.

2. Sintered soft-magnetic material according to Claim 1, **characterized in that** the grain size of the first pulverulent starting component is between D₅₀ = 1 *µ*m and 300 *µ*m, in particular 3 *µ*m to 100 *µ*m.

3. Sintered soft-magnetic material according to Claim 1, **characterized in that** the grain size of the second pulverulent starting component is between D₅₀ = 0.1 *µ*m and 100 *µ*m, in particular 0.5 *µ*m to 10 *µ*m.

4. Sintered soft-magnetic material according to at least one of the preceding claims, **characterized in that** the second starting component is added to the starting mixture in a proportion of from 0.02% by mass to 20% by mass, and the first starting component is added to the starting mixture in a proportion of from 99.98% by mass to 80% by mass.

5. Sintered soft-magnetic material according to at least one of the preceding claims, **characterized in that** during the sintering the second starting component is temporarily at least substantially liquefied, and **in that** after the sintering the second starting component at least substantially surrounds the first starting component, in particular as a grain boundary phase.

## Revendications

1. Matériau fritté magnétiquement doux, notamment pour utilisation dans des soupapes magnétiques, produit à partir d'un mélange initial donnant après frittage le matériau magnétiquement doux et contenant un premier composant initial, pulvérulent et magnétiquement doux, qui est le composant principal et au moins un second composant initial, pulvérulent, qui est le composant secondaire, ce premier composant étant un métal magnétiquement doux contenant au moins un élément choisi dans le groupe fer, cobalt, chrome et nickel ou un alliage de ces éléments ou un alliage de silicium, ou étant un alliage métallique magnétiquement doux, tandis que le second composant initial est un générateur de phase liquide qui contient du bore, du phosphore, un borure, un phosphure ou un alliage de bore et/ou de phosphore avec au moins un élément choisi dans le groupe fer, cobalt, nickel, chrome et silicium.

2. Matériau fritté magnétiquement doux selon la revendication 1,
**caractérisé en ce que**
la granulométrie du premier composant initial pulvérulent est comprise entre D₅₀ = 1 µm et 300 µm, notamment entre 3 µm et 100 µm.

3. Matériau fritté magnétiquement doux selon la revendication 1,
**caractérisé en ce que**
la granulométrie du premier composant initial pulvérulent est comprise entre D₅₀ = 0,1 µm et 100 µm, notamment entre 0,5 µm et 10 µm.

4. Matériau fritté magnétiquement doux selon au moins une des revendications précédentes,
**caractérisé en ce que**
le second composant initial du mélange initial est ajouté dans une proportion de 0,02 % à 20 % en masse et le premier composant initial dans une proportion de 99,98 % à 80 % en masse.

5. Matériau fritté magnétiquement doux selon au moins une des revendications précédentes,
**caractérisé en ce que**
le second composant initial lors du frittage, est temporairement fluidifié au moins largement et, enveloppe au moins largement le premier composant initial après frittage, notamment en tant que phase limite inter-cristalline.
